# EUROPEAN PATENT SPECIFICATION

(11) **EP 0 509 095 B1**
(45) Date of publication and mention of the grant of the patent: **03.05.1995**
(21) Application number: 90916063.2
(22) Date of filing: 01.11.1990
(51) Int. Cl.: B29D 30/32

(54) **GREEN TIRE BUILDING APPARATUS**
ROHREIFENAUFBAUMASCHINE
DISPOSITIF DE CONFECTION DE PNEUS CRUS

(43) Date of publication of application: 21.10.1992
(73) Proprietor: SUMITOMO RUBBER INDUSTRIES LIMITED, Chuo-ku Kobe-shi Hyogo 651 (JP)
(72) Inventor: NOJIRI, Yasushi 8-146, Nakazatocho 1-chome, Kobe-shi Hyogo-ken 651-11 (JP); WATANABE, Yoshiomi 8-11-9, Mikagehonmachi, Kobe-shi Hyogo-ken 658 (JP)
(74) Representative: Stewart, Charles Geoffrey
(86) International application number: JP9001406
(87) International publication number: WO9207708

(56) References cited:
- FR-A- 2 149 502
- FR-A- 2 372 693
- JP-A- 1 237 127
- JP-A-47 012 741
- JP-A-55 114 554
- JP-A-56 078 964
- US-A- 3 784 426
- US-A- 3 816 218

## Description

### BACKGROUND OF THE INVENTION

The present invention relates to a green tyre building apparatus for use in a tyre production process.

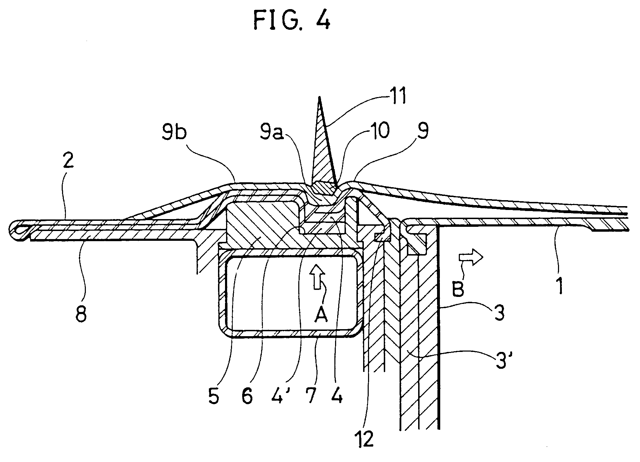

As an apparatus for building a green tyre, there has been conventionally known, for example, the single-stage building apparatus shown in Figure 4. The apparatus shown in Figure 4 is symmetrical with respect to the vertical centre line of a shaping drum, and therefore only the left half of the apparatus is shown for the sake of simplicity. In Figure 4, indicated at 1 is a rubber former, and at 2 a turn-up bladder. When the bladder 2 is not inflated and the bead locking mechanism is not actuated, the outer surface of the bladder 2 is in the form of a cylinder having substantially the same radius as the cylinder formed by the outer surface of the rubber former 1.

The edge of the rubber former 1 is fixedly held by clamp rings 3,3'. The inner end 12 of the turn-up bladder 2 and the outer end thereof are both fixed close to the end of the rubber former 1. A solid rubber region 4' is integrally formed with the outer edge of the bladder 2. Another solid rubber region 4 is also formed integrally with the bladder 2 near the inner edge thereof. Both solid rubber regions 4,4' are fitted in respective recessed portions 6 formed in the outer surfaces of a plurality of metal segments 5 arranged in the circumferential direction of the shaping drum. The metal segments 5 collectively form an annular body. An annular rubber bag 7 is provided inside the metal segments in bearing contact with the inner surface of the annular body formed by the metal segments 5. Indicated at 8 is the support for the bladder 2.

In this apparatus, a carcass 9 is formed by winding or wrapping tyre components such as a ply and a chafer around the rubber former 1. A bead 10 with or without an apex is set in the specified position on the carcass 9. In this state, when the rubber bag 7 is inflated with air supplied to the inside thereof, the state shown in Figure 4 can be obtained. More specifically, the rubber bag 7 pushes the metal segments 5 outwards, i.e. in the direction of the arrow A in Figure 4, expanding the radii of the solid rubber bands 4,4'. In addition, the portion 9a of the carcass 9 in contact with the bead 10 is pushed up against the inner circumferential surface of the bead 10 by the inflated rubber bag 7, and thereby the bead 10 is locked in to the portion 9a. This mechanism is referred to as a bead locking mechanism hereinafter.

In the above state, the bladder 2 is inflated with air supplied to the inside thereof, and a side portion 9b of the carcass 9 is turned up around the bead 10 by the inflated bladder 2. This mechanism is referred to as a carcass turn-up mechanism hereinafter. Further, the clamp rings 3,3', the bead locking mechanism, and the carcass turn-up mechanism are moved by a predetermined distance in an axial direction with respect to the shaping drum to a right half of the apparatus, i.e. in the direction of arrow B while inflating the rubber former 1. Thus, the carcass 9 is shaped in to the form of a toroid. A green tyre can then be completed by applying a breaker and tread assembly to the toroidal carcass.

However, in the above apparatus where the metal segments 5 are moved outwards by the inflation of the rubber bag 7, there is a limit in the pressure which can be generated in the rubber bag 7. Accordingly, the force available in practice to lock the carcass portion 9a to the bead 10 is often insufficient. With the bead 10 locked with insufficient restraint by the carcass portion 9a, when pulled during the tyre shaping operation on the rubber former 1, the carcass portion 9a is liable to dislocate relative to the bead 10 in the axial direction of the shaping drum. Consequently, the cord paths become displaced, causing the uniformity of the tyre to be degraded.

Further, the rubber bag 7 used is liable to deform in the apparatus. Accordingly, the centre of the bead 10 is liable to dislocate from the shaping drum, resulting in eccentricity. This is also a large factor contributing to degradation of uniformity.

Moreover, in the above apparatus, the solid rubber regions or bands 4,4' are integrally formed with the bladder 2. Accordingly, it is difficult to fabricate the bladder 2 and to assemble the bladder 2 into the apparatus. Furthermore, if the bladder 2 is punctured, the rubber band have to be replaced with new ones together with the bladder, wasting the still usable rubber bands. An attempt at partial solution to the above problems is disclosed by US-A-3784426 conform the preamble of claim 1, which describes a tyre building apparatus comprising an expansible drum including at either axial end sets of radially movable fingers designed to hold a tyre bead. Axially outward of each set of fingers is provided a turn-up bladder which in its deflated state is radially inside the radially outermost part of the fingers.

### DISCLOSURE OF THE INVENTION

In order to solve the foregoing drawbacks, the present invention is constructed as follows.

A green tyre building apparatus provided with a shaping drum including a main body having a surface on which a layer of tyre material is to be placed, and opposite sides on which beads are to be respectively disposed concentrically of the shaping drum in radially outwardly spaced relation to the shaping drum, the green building apparatus comprising on each of the opposite sides of the shaping drum main body a plurality of bead locking segments arranged in the form of a circle concentric with the shaping drum and in such a position that an outer periphery of the plurality of bead locking segments are opposite to an inner periphery of the bead, the plurality of bead locking segment being movable in radial directions of the shaping drum to have an expanded state and a contracted state, a movable member movable in the axial direction of the shaping drum, driving means for moving the movable member, and a movement conversion mechanism for converting the movement of the movable member to movements of the respective bead locking segments in the radial direction of the shaping drum, characterised in that the apparatus further comprises a resilient annular member mounted on the outer periphery of the plurality of bead locking segments, and adapted for pushing the layer of tyre material against the inner periphery of the bead when the plurality of bead locking segments are in the expanded state and a turn-up bladder arranged radially outside the radially outer surface of the resilient annular member and formed independently of the resilient annular member.

With the above construction, a carcass may be formed by winding tyre components around the shaping drum with the opposite edges thereof placed on respective turn-up bladders. Subsequently, each bead is set in its specified position on the carcass and locked. The drive means then moves the movable member in the predetermined axial direction of the shaping drum so as to move all the bead locking segments radially outwards. Thereby, the resilient annular member pushes the carcass up against the inner circumferential surface of the bead. In this state, the respective bead locking segments push the carcass up against the inner circumferential surface of the bead with a strong driving force from the driving means. Accordingly, the bead is not able to slip out of its locked position on the carcass during the tyre shaping operation.

Further, the green tyre building apparatus of the present invention comprises a shaping drum including a main body have on each opposite sides a plurality of bead locking segments having on outer surfaces thereof recessed portions, arranged in a circumferential direction of the shaping drum in such a manner that the recessed portions of the respective segments are connected to one another and form collectively an annular groove, a resilient annular member supported movably in radial directions of the shaping drum , and located in the annular groove formed by the bead locking segments, a turn-up bladder formed independently of the resilient annular member and extending outside an outer surface of the resilient annular member to a position outwards of an edge of the shaping drum main body in the axial direction of the shaping drum.

With the above construction, the resilient annular member and the turn-up bladder are formed independently of each other. Accordingly, the replacement operation of, for example, the turn-up bladder can be effected independently of the resilient annular member.

### BRIEF DESCRIPTION OF THE DRAWINGS

Figure 1 is a plan view in section showing a main portion of a green tyre building apparatus embodying the present invention;
Figure 2 is a side elevation view showing the main portion of the green tyre building apparatus;
Figure 3 is a plan view showing the main portion of the green tyre building apparatus; and
Figure 4 is a plan view in section showing a main portion of a prior art green tyre building apparatus.

### BEST MODE FOR CARRYING OUT THE INVENTION

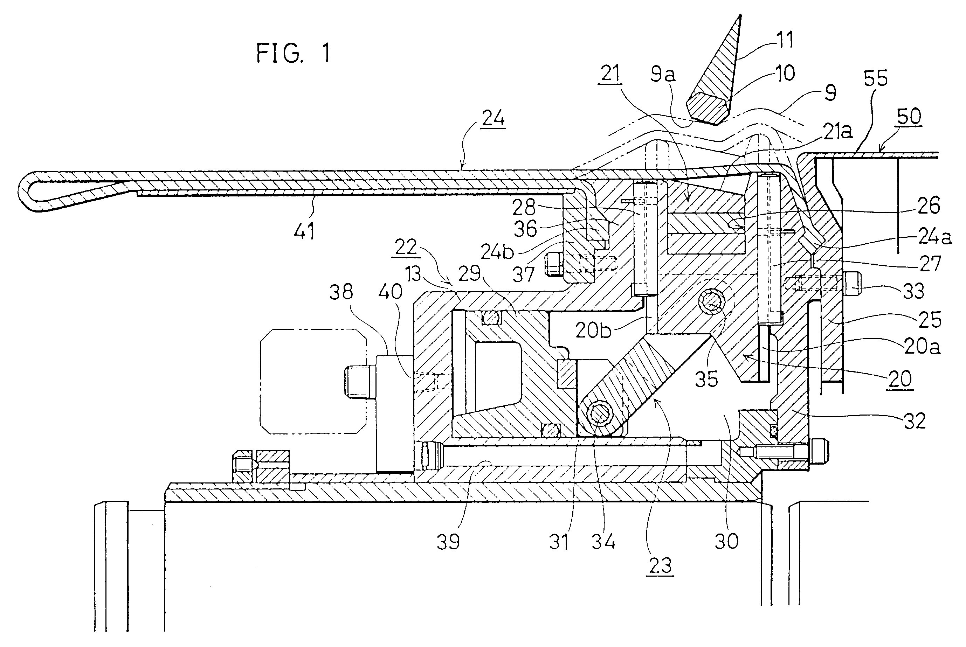

An embodiment of the present invention will be described with reference to Figures 1 to 3.

In these Figures, indicated at 50 is a main body of a shaping drum. In this embodiment, the shaping drum is not provided with a bladder. The green tyre building apparatus in this embodiment is symmetrical with respect to the vertical centre line of the shaping drum, and therefore only the left half portion of the apparatus is shown in Figure 1 for the sake of simplicity. A driving portion (driving means) 22 is attached to a side wall 25 of the shaping drum main body 50. The driving portion 22 comprises an inner side wall 32 and an outer side wall 36. The inner side wall 32 is secured to the side wall 25 of the shaping drum main body 50 by a bolt 33. The outer side wall 36 has an annular cylinder portion 13 formed in a centre portion therefor.

Between the side walls 32 and 36 is defined a space 30 open outwards. In the space 30, a plurality of bead locking segments 20 are juxtaposedly arranged in a circumferential direction of the drum main body 50 so as to form a ring. As a mounting structure of the bead locking segments, guide rods 27,28 are respectively secured to opposing faces of the side walls 32 and 36 extending in a radial direction of the shaping drum. In addition, grooves 20a, and 20b are formed respectively in an inner and outer side portions of each bead locking segment 20. The guide rods 27,28 are respectively fitted in the grooves 20a,20b. Accordingly each bead locking segment 20 is mounted so as to be movable along the guide rods 27,28.

An annular piston (moving member) 29 is provided in the cylinder portion 13. On the outer face of the cylinder portion 13 is provided a piping block 38. Air is supplied to the space 30 where the bead locking segments 20 are accommodated through the piping block 38 and a passage 39. Air is also supplied rearwards of the piston 29 through the piping block 38 and an opening 40 for supplying and discharging air to and from the cylinder portion 13, whereby the piston 29 is actuated.

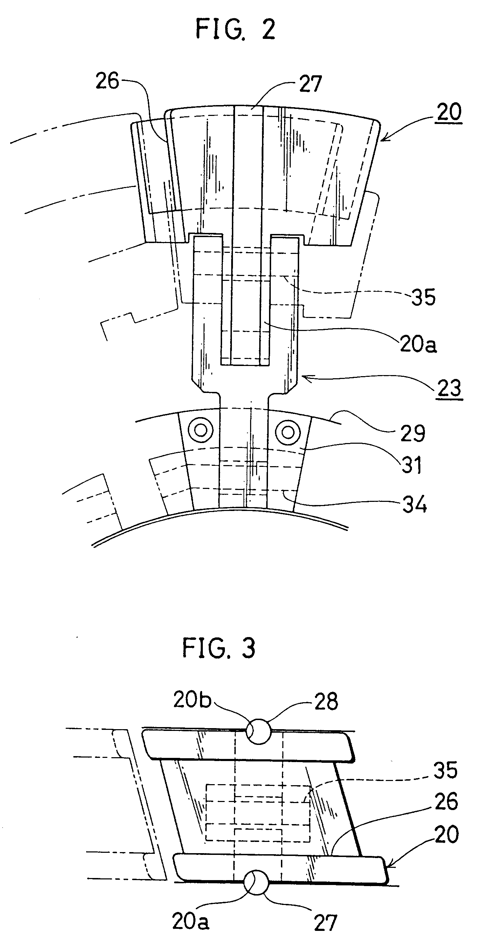

In an inner end portion of the piston 29 with respect to the axial direction of the shaping drum are formed link mounting portions 31 including two brackets as shown in Figure 2. As many link mounting portions 31 are provided as bead locking segments 20. One end of each drive link 23 is mounted pivotally on a pin 34 between the brackets of each link mounting portion 31. The other end of each drive link 23 is shaped in the form of a fork, and pivotally mounted by a pin 35 to an inner end portion of each bead locking segment 20 at a radially inward point, i.e. the lower end portion thereof in Figure 1. More specifically, the piston 29 and the respective bead locking segments 20 are respectively coupled through the drive links 23, constituting a link mechanism. By this link mechanism, the movement of the piston 29 in the axial direction of the drum is converted to movement of the bead locking segments 20 in the radial directions thereof.

In the outer surface of the respective bead locking segment 20 are formed grooves 26 open outwards in the radial direction. (In Figure 1, the groove 26 is open upwards). The bead locking segments are so arranged that the grooves 26 thereof collectively form an annular groove. A plurality of solid rubber rings (in this embodiment, three rings) are fitted in the annular groove with one rubber ring lying over another. These solid rubber bands constitute an annular rubber band (resilient annular member) 21. In the embodiment, the outer surface 21a of the outer rubber band 21 is inclined. The inclination angle of the outer surface 21a may be set at a specified value depending upon a mounting state of a bead 10 relative to a tyre. In some cases, the outer surface 21a may not need to be inclined.

A turn-up bladder 24 formed independently of the rubber band 21 is provided axially outwards of the shaping drum main body 50 (the left-hand side in Figure 1) so as to cover completely the driving portion 22 (the upper side in Figure 1). One inner edge 24a of the turn-up bladder 24 is fixedly held between the inner side wall 32 and the side wall 25 of the shaping drum main body 50. The bladder 24 extends from the inner end 24a thereof through outer surfaces of the bead locking segments 20 and the rubber band 21 to a position axially outwards of an end of the shaping drum, shaping into a cylindrical form. the bladder 24 is then turned up in the middle, and an outer edge 24b thereof is fixedly held between the outer side wall 36 and another annular member 37.

Air is supplied and discharged to and from the turn-up bladder 24 by the passage 39 connected to the outside through the piping block 38, the space 30, and a space defined by the outer side wall 36, the bead locking segments 20, and the inner side wall 32. In Figure 1, the opening 40 is another means for supplying and discharging the air to and from the cylinder portion 13. Indicated at 41 is a support for the bladder, and at 55 a drum portion of the shaping drum.

Next, there will be described a green tyre building process using the above apparatus.

Firstly, the carcass 9 is formed by winding tyre components around the apparatus. Then, the bead 10 having a pre-assembled apex 11 is set in position corresponding to the position of the bead locking segments 20. It should be noted that the bead 10 need not be provided with an apex 11. In this state, compressed air is supplied to the cylinder portion 13 of the driving portion 22 through the opening 40, so that the piston 29 is moved to the right in Figure 1. This movement of the piston 29 is converted to radially outward movement of the respective bead locking segments 20 by the movement conversion mechanism constituted by the respective drive links 23. More specifically, each drive link 23 is displaced from an inclined state to an upright state, pushing the corresponding bead locking segment 20 radially outwards. As a consequence, the radius of the rubber band 21 is expanded. The radially expanded rubber band 21 pushes the portion 9a of the carcass 9 on which the bead 10 is wound up against the inner circumferential surface of the bead 10 as shown with phantom lines in Figure 1. this causes the bead 10 to be brought in to a locked state.

With the bead 10 locked, air is supplied to the spaced 30, and thereby the turn-up bladder 24 is inflated so as to turn up the edge portion of the carcass 9 around the bead 10. Then air is supplied to the shaping drum main body 25 so as to shape the carcass 9 in to the form of a toroid. A green tyre may then be completed by applying a breaker and tread assembly to the toroidal carcass. Through these states, the bead 10 is locked in the carcass 9 with a strong restrainer by the force of the driving portion 22. Accordingly, there is very little likelihood that the bead 10 is dislocated relative to the carcass portion 9a during the tyre shaping operation.

Further, in the case where the turn-up bladder 24 needs to be replaced due to a puncture or other causes, only the turn-up bladder 24 has to be replaced without the rubber band 21.

It should be noted that the present invention is not limited in the foregoing embodiment, but can also be embodied as follows:
(1) In the foregoing embodiment, a rubber band (resilient annular member) 21 comprises a plurality of solid rubber rings, but may comprise a single resilient member. However, having a multi-layer structure as shown in the foregoing embodiment, the rubber band 21 can be radially expanded at a relatively smaller pressure during a bead locking operation. Also, the reduction of the gauge pressure, which is caused due to the expansion, can be maintained at a relatively smaller amount.
(2) In the foregoing embodiment, axial movement of a piston 29 is converted to radial movement of respective bead locking segments 20 through a link mechanism. However, the specific construction of movement conversion mechanism is not essential. For example, the movement conversion mechanism may be constructed as follows. A cam portion tapered to a point is provided at an axially inner end of the piston 29 with respect to the centre of the shaping drum. Each bead locking segment 20 is provided with a cam follower in contact with the cam portion. The cam position and the cam followers in contact therewith serve as a movement conversion mechanism similar to the aforementioned link mechanism, thereby providing the same effect as the above embodiment.
(3) In the foregoing embodiment, an apparatus is provided with a former not having a bladder, i.e. of the telescoping type. However, the present invention may well be applied to an apparatus provided with a former having a bladder.

### INDUSTRIAL EXPLOITABILITY

As described above, the present invention is very useful as a green tyre building apparatus. Respective bead locking segments can be driven strongly in the radial direction with the driving force of a single drive means by way of a movement conversion mechanism. Thereby, a bead can be locked accurately in a carcass portion with a strong restraint. Accordingly, occurrences can be prevented such as carcass dislocation relative to the beads during tyre shaping, or cord paths becoming out of place, resulting in an improved uniformity of the tyre.

Further, according to the present invention, the turn-up bladder is formed independently of the resilient annular member, and provided outside the resilient annular member, which consequently makes it possible to fabricate the bladder more easily than a conventional one, and facilitates the replacement operation for a punctured bladder.

## Claims

1. A green tyre building apparatus provided with a shaping drum including a main body (50) having a surface on which a layer of tyre material is to be placed, and opposite sides on which beads are to be respectively disposed concentrically of the shaping drum in radially outwardly spaced relation to the shaping drum, the green tyre building apparatus comprising on each of the opposite sides of the shaping drum main body a plurality of bead locking segments (20) arranged in the form of a circle concentric with the shaping drum and in such a position that an outer periphery of the plurality of bead locking segments are opposite to an inner periphery of the bead, the plurality of bead locking segment being movable in radial directions of the shaping drum to have an expanded state and a contracted state, a movable member (29) movable in the axial direction of the shaping drum, driving means for moving the movable member (29), and a movement conversion mechanism for converting the movement of the movable member (29) to movements of the respective bead locking segments in the radial direction of the shaping drum, characterised in that the apparatus further comprises a resilient annular member (21) mounted on the outer periphery of the plurality of bead locking segments (20), and adapted for pushing the layer of tyre material against the inner periphery of the bead when the plurality of bead locking segments (20) are in the expanded state and a turn-up bladder (24) arranged radially outside the radially outer surface of the resilient annular member (21) and formed independently of the resilient annular member (21).

2. A green tyre building apparatus according to claim 1 characterised in that the plurality of bead locking segments (20) have in their respective outer surfaces recessed portions (26) which form an annular groove when the plurality of bead locking segments (20) are in the contracted state and the resilient annular member (21) is held in the recessed portions.

3. A green tyre building apparatus according to claim 1 or claim 2 characterised in that the moving means (22) includes a movable member (29) movable in axial directions of the shaping drum (50), a driving member (22) for moving the movable member (29) in the axial directions, and a movement conversion mechanism (23) for converting the axial movement of the movable member (29) to the respective radial movements of the plurality of bead locking segments (20).

4. A green tyre building apparatus according to claim 3 characterised in that the movable member includes a piston (29), the driving member (22) includes a cylinder (13) for driving the piston (29) and the movement conversion mechanism (23) includes a link mechanism for coupling the piston (29) with the plurality of bead lock segments (20), and a guide member (27,28) for guiding each of the plurality of bead lock segments (20) in the radial directions.

5. An apparatus according to any of claims 1 to 4 characterised in that the resilient annular member (21) comprises a plurality of resilient members lying one over another in the radial direction of the shaping drum.

6. An apparatus according to any of claims 1 to 5 characterised in that the resilient annular member (21) has an outer surface inclined with respect to the axis of the shaping drum.

## Patentansprüche

1. Eine Rohreifenaufbauvorrichtung mit einer Formtrommel mit einem Hauptkörper (50), der eine Oberfläche aufweist, auf der eine Lage von Reifenmaterial zu plazieren ist, und mit gegenüberliegenden Seiten, auf denen Wulste jeweils konzentrisch zur Formtrommel in einer radial nach außen hin beabstandeten Beziehung zur Formtrommel anzuordnen sind, wobei die Rohreifenaufbauvorrichtung auf jeder der gegenüberliegenden Seiten des Formtrommelhauptkörpers eine Mehrzahl von Wulstsperrsegmenten (20) umfaßt, die in der Form eines Kreises, der konzentrisch zu der Formtrommel ist, und in einer solchen Position angeordnet sind, daß ein äußerer Umfang der Mehrzahl von Wulstsperrsegmenten einem inneren Umfang des Wulstes gegenüberliegen, wobei die Mehrzahl der Wulstsperrsegmente in radialen Richtungen der Formtrommel bewegbar sind, um einen erweiterten Zustand und einen zusammengezogenen Zustand aufzuweisen, einem bewegbaren Glied (29), welches in der axialen Richtung der Formtrommel bewegbar ist, einem Antriebsmittel zum Bewegen des bewegbaren Gliedes (29) und einem Bewegungsumwandlungsmechanismus zum Umwandeln der Bewegung des bewegbaren Gliedes (29) in Bewegungen der jeweiligen Wulstsperrsegmente in der radialen Richtung der Formtrommel,
dadurch gekennzeichnet,
daß die Vorrichtung ferner ein elastisches ringförmiges Glied (21), welches an dem äußeren Umfang der Mehrzahl von Wulstsperrsegmenten (20) gehalten ist und geeignet ist, die Lage von Reifenmaterial gegen den inneren Umfang des Wulstes zu drücken, wenn sich die Mehrzahl von Wulstsperrsegmenten (20) im ausgedehnten Zustand befinden und eine Umschlagblase (24), die radial außerhalb der radialen äußeren Oberfläche des elastischen ringförmigen Gliedes (21) angeordnet ist und unabhängig von dem elastischen ringförmigen Glied (21) ausgebildet ist, umfaßt.

2. Eine Rohreifenaufbauvorrichtung nach Anspruch 1,
dadurch gekennzeichnet,
daß die Mehrzahl von Wulstsperrsegmenten (20) in ihren jeweiligen äußeren Oberflächen mit einer Ausnehmung versehene Abschnitte (26) aufweisen, welche eine ringförmige Nut ausbilden, wenn sich die Mehrzahl von Wulstsperrsegmenten (20) im zusammengezogenen Zustand befinden und das elastische ringförmige Glied (21) in den mit einer Ausnehmung versehenen Abschnitten gehalten ist.

3. Eine Rohreifenaufbauvorrichtung nach Anspruch 1 oder 2,
dadurch gekennzeichnet,
daß das Bewegungsmittel (22) ein bewegbares Glied (29), das in axialen Richtungen der Formtrommel (50) bewegbar ist, ein Antriebsglied (22) zum Bewegen des bewegbaren Gliedes (29) in die axialen Richtungen und einen Bewegungsumwandlungsmechanismus (23) zum Umwandeln der axialen Bewegung des bewegbaren Gliedes (29) in die jeweiligen radialen Bewegungen der Mehrzahl von Wulstsperrsegmenten (20) umfaßt.

4. Eine Rohreifenaufbauvorrichtung nach Anspruch 3,
dadurch gekennzeichnet,
daß das bewegbare Glied einen Kolben (29) umfaßt, daß das Antriebsglied (22) einen Zylinder (13) zum Antreiben des Kolbens (29) umfaßt und daß der Bewegungsumwandlungsmechanismus (23) einen Gelenkmechanismus zum Koppeln des Kolbens (29) mit der Mehrzahl von Wulstsperrsegmenten (20) und ein Führungsglied (27, 28) zum Führen von jedem der Mehrzahl von Wulstsperrsegmenten (20) in den radialen Richtungen umfaßt.

5. Eine Vorrichtung nach einem der Ansprüche 1 bis 4,
dadurch gekennzeichnet,
daß das elastische ringförmige Glied (21) eine Mehrzahl von elastischen Gliedern umfaßt, die übereinander in der radialen Richtung der Formtrommel liegen.

6. Eine Vorrichtung nach einem der Ansprüche 1 bis 5,
dadurch gekennzeichnet,
daß das elastische ringförmige Glied (21) eine äußere Oberfläche aufweist, die in Bezug auf die Achse der Formtrommel geneigt ist.

## Revendications

1. Appareil de confection de pneumatique à l'état non vulcanisé, ayant un tambour de mise en forme comprenant un corps principal (50) ayant une surface sur laquelle est destinée à être placée une couche d'un matériau du pneumatique, et des côtés opposés sur lesquels des talons sont destinés à être respectivement disposés concentriquement au tambour de mise en forme, à une certaine distance radiale à l'extérieur du tambour de mise en forme, l'appareil de confection de pneumatique à l'état non vulcanisé comprenant, sur chacun des côtés opposés du corps principal du tambour de mise en forme, plusieurs segments (20) de blocage de talon disposés sous forme d'un cercle concentrique au tambour de mise en forme et dans une position telle que la périphérie externe des segments de blocage de talon est opposée à la périphérie interne du talon, les segments de blocage de talon étant mobile en direction radiale par rapport au tambour de mise en forme afin qu'ils prennent un état dilaté et un état contracté, un organe (29) mobile dans la direction axiale du tambour de mise en forme, un dispositif d'entraînement destiné à déplacer l'organe mobile (29), et un mécanisme de transformation de mouvement destiné à transformer le mouvement de l'organe mobile (29) en mouvements des segments respectifs de blocage de talon dans la direction radiale du tambour de mise en forme, caractérisé en ce que l'appareil comporte en outre un organe annulaire élastique (21) monté à la périphérie externe des segments (20) de blocage de talon, et destiné à pousser une couche du matériau du pneumatique contre la périphérie interne du talon lorsque les segments (20) de blocage de talon sont à l'état dilaté, et une vessie de rabattage (24) placée radialement à l'extérieur de la surface radialement externe de l'organe annulaire élastique (21) et formée indépendamment de l'organe annulaire élastique (21).

2. Appareil de confection d'un pneumatique à l'état non vulcanisé selon la revendication 1, caractérisé en ce que les segments (20) de blocage de talon ont, à leur surface externe respective, des parties évidées (26) qui forment une gorge annulaire lorsque les segments (20) de blocage de talon sont à l'état contracté, et l'organe annulaire élastique (21) est retenu dans les parties évidées.

3. Appareil de confection de pneumatique à l'état non vulcanisé selon la revendication 1 ou 2, caractérisé en ce que le dispositif (22) de déplacement comporte un organe (29) mobile en direction axiale du tambour (50) de mise en forme, un organe (22) d'entraînement destiné à déplacer l'organe mobile (29) en direction axiale, et un mécanisme (23) de transformation de mouvement destiné à transformer le mouvement axial de l'organe mobile (29) en mouvements radiaux respectifs des segments (20) de blocage de talon.

4. Appareil de confection de pneumatique à l'état non vulcanisé selon la revendication 3, caractérisé en ce que l'organe mobile comporte un piston (29), l'organe d'entraînement (22) comprend un cylindre (13) destiné au déplacement du piston (29) et le mécanisme de transformation de mouvement (23) comprend un mécanisme de liaison destiné à coupler le piston (29) aux segments (20) de blocage de talon, et un organe (27, 28) de guidage de chacun des segments (20) de blocage de talon en direction radiale.

5. Appareil selon l'une quelconque des revendications 1 à 4, caractérisé en ce que l'organe annulaire élastique (21) comporte plusieurs organes élastiques placés les uns sur les autres dans la direction radiale du tambour de mise en forme.

6. Appareil selon l'une quelconque des revendications 1 à 5, caractérisé en ce que l'organe annulaire élastique (21) a une surface externe inclinée par rapport à l'axe du tambour de mise en forme.
